# EUROPÄISCHE PATENTSCHRIFT

(11) **EP 1 307 503 B1**
(45) Veröffentlichungstag und Bekanntmachung des Hinweises auf die Patenterteilung: **29.09.2004**
(21) Anmeldenummer: 01956416.0
(22) Anmeldetag: 28.07.2001
(51) Int. Cl.: C08J 5/04, B29C 70/58, B29B 7/90, B29B 15/10, B29C 45/00, B29C 47/00, B29C 49/04

(54) **VERFAHREN ZUM HERSTELLEN EINES VERSTÄRKTEN KUNSTSTOFFBAUTEILS**
METHOD FOR PRODUCTION OF A REINFORCED PLASTIC COMPONENT
PROCEDE DE REALISATION D'UN ELEMENT STRUCTUREL PLASTIQUE RENFORCE

(30) Priorität: 03.08.2000 DE 10038553
(43) Veröffentlichungstag der Anmeldung: 07.05.2003
(73) Patentinhaber: Möller Plast GmbH, 33649 Bielefeld (DE)
(72) Erfinder: BECKMANN, Friedhelm, 32120 Hiddenhausen (DE)
(74) Vertreter: Schirmer, Siegfried, Dipl.-Ing.
(86) Internationale Anmeldenummer: PCT/DE2001/002897
(87) Internationale Veröffentlichungsnummer: WO 2002/012375

(56) Entgegenhaltungen:
- EP-A- 0 319 589
- EP-A- 0 744 261
- DE-A- 19 536 074
- DE-A- 19 852 067

## Beschreibung

Die Erfindung betrifft ein Verfahren zum Herstellen eines verstärkten Kunststoffbauteils, insbesondere durch Spritzgießen, Extrudieren oder Extrusionsblasen, bei dem ein thermoplastisches Basismaterial als Schmelze aufbereitet und ein aus pflanzlichen Materialien gewonnenes Verstärkungsmaterial eingebracht wird.

Bei der Herstellung von Bauteilen aus einem thermoplastischen Basiswerkstoff werden meist die für thermoplastische Werkstoffe üblichen Verarbeitungsverfahren wie Spritzgießen, Extrusionsblasen, Profilextrusion usw. eingesetzt. Derartige Bauteile kommen in den verschiedensten Branchen zum Einsatz, bspw. der Automobilindustrie, der Bauindustrie und der Elektoindustrie. Meist werden Bauteile verlangt, die über eine große Bauteilsteifigkeit verfügen. In solchen Fällen können als Verstärkungsmaterial Glasfasern als Kurzglasfasern mit einer Länge zwischen 1 mm und 4 mm oder als Langglasfasern mit einer Länge von 10 mm bis 12 mm zugegeben werden, bspw. beim Spritzgießverfahren und beim Extrusionsblasverfahren. Da Glasfasern jedoch ungünstige Recyclingeigenschaften haben und beim thermischen Recycling zu umweltbelastenden Reststoffen führen, ist versucht worden, Glasfasern durch Naturfasern zu ersetzen, bspw. von Flachs, Hanf, Jute, Sisal, Kenaf, Ramie oder Nesselpflanzen. Da die Faserlänge für die Verwendung bei den genannten Verfahren begrenzt ist, besteht ein großes Problem darin, die Fasern homogen in eine Kunststoffschmelze einzubringen.

Eine mögliche Vorgehensweise besteht darin, daß durch Parallelisieren der Fasern zunächst ein Kardenband erzeugt wird und dieses anschließend durch Verdrillung zu einem Garn versponnen wird, welches dann in einer Extrusionsanlage mit einer Kunststoffschmelze imprägniert und in einem anschließenden Schneidwerk auf eine gewünschte Länge geschnitten wird. Dieses Verfahren ist aufwendig und teuer.

Eine direkte Zuführung von Naturfasern in eine Schmelze ist nicht möglich, da die Naturfasern verfilzen bzw. verknäulen und nicht homogen in eine Schmelze eingemischt werden können.

EP 0 319 589 A1 offenbart ein Kunststoffmaterial, das einen Thermoplasten sowie Fasern pflanzlicher Herkunft enthält, die als Verstärkungsmaterial eingemischt werden. Ebenso ist die Zugabe von Füllstoffen, wie Holzmehl mit einer Partikelgröße von etwa 3 mm, zusätzlich zu den Verstärkungsfasern pflanzlichen Ursprungs offenbart, um die gleichmäßige Verteilung der Fasern zu ermöglichen. Aus EP 0 744 261 und DE 195 36 074 ist ein Verbundbauteil bekannt, das als Verstärkungseinlage für ein thermoplastisches oder duroplastisches Material Naturfasern vorsieht, beispielsweise zerkleinerte Gewebe aus Jute- oder Sisalfasern. Zur Variation der mechanischen Eigenschaften Bönnen den Gute-/Sisalfasern auch geringe Mengen (10 bis 30%) Schähen zugegeben werden.Weiterhin kann vorgesehen sein, die Fasern zusätzlich mit einem Haftvermittler zu versehen. Die DE 198 52 067 A1 offenbart einen faserverstärkten Kunststoff, der ein thermoplastisches oder thermoelastisches Polymer sowie Verstärkungsfasern aufweist, wobei als Verstärkungsfasern Hanffasem angegeben sind. Als Bestandteil des Polymers kann insbesondere die Fraktion an Ligninsulfonsäure eingesetzt werden, die in der Sulfitablage der Papierherstellung enthalten ist.

Die Aufgabe der Erfindung besteht darin, ein Verfahren anzugeben, womit es möglich ist, ein aus pflanzlichen Materialien gewonnenes Verstärkungsmaterial in möglichst einfacher Weise homogen in ein plastifiziertes Basismaterial einzumischen.

Die Aufgabe der Erfindung wird erfindungsgemäß durch ein Verfahren dadurch gelöst, daß als Verstärkungsmaterial in schütt- und rieselfähiger Form zerkleinerte Schäben, insbesondere von Einjahrespflanzen, und/oder derart zerkleinerte holzige

Bestandteile von Chinaschilf der Schmelze des Basismaterials zugeführt und homogen in diese eingemischt werden, wobei das Verstärkungsmaterial keine oder die Schütt- oder Rieselfähigkeit nicht wesentlich beeinträchtigende Anteile an Fasermaterial enthält.

Da Schäben eine poröse, schwammartige Struktur aufweisen, die einem hohen Druck, wie er beispielsweise bei der Extrusion auftritt, nicht standhält und insbesondere in Kombination mit höheren Temperaturen, wie sie bei der Verarbeitung von thermoplastischen Materialien unumgänglich sind, zu einer Kompaktierung und zu einem unerwünschten teilweisen Verlust des Gewichtsvorteils führt, kann in Ausgestaltung des Verfahrens vorgesehen sein, daß ein stabilisierendes Material in die Poren des Verstärkungsmaterials eingebracht und/oder das Verstärkungsmaterial mit dem stabilisierenden Material ummantelt wird, so daß das Verstärkungsmaterial eine hohe Widerstandsfähigkeit gegen Komprimierung aufweist, wobei als stabilisierendes Material Wasserglas, Epoxidharz, expandierbares Epoxidharz und/oder lackartige Substanzen verwendet werden.

Es besteht die Möglichkeit, Schäben aus grünem Ausgangsmaterial zu verwenden. Bevorzugt haben die Schäben eine Länge zwischen etwa 0,5 mm und 10 mm, bevorzugt zwischen 0,5 mm und 5 mm und weiter bevorzugt zwischen 0,5 mm und 3 mm, wobei die Schäben von Flachs und/oder Hanf und/oder Kenaf verwendet werden.

Zweckmäßige Ausgestaltungen des erfindungsgemäßen Verfahrens sind in den übrigen abhängigen Ansprüchen aufgezeigt.

Der große Vorteil des erfindungsgemäßen Verfahrens liegt darin, daß das Verstärkungsmaterial bereits bei der Aufbereitung bzw. Plastifizierung und Homogenisierung eines thermoplastischen Ausgangsmaterials in Form einer Schmelze direkt in den Schmelzestrom eingemischt werden kann, so daß ein zusätzlicher kostenträchtiger Arbeitsgang vermieden wird. Hierbei ist Voraussetzung, daß keine oder nur geringfügige Anteile von Fasermaterial in den Schäben enthalten sind, so daß die rieselfähige bzw. schüttfähige Konsistenz erhalten bleibt. Bei Chinaschilf handelt es sich bereits um ein reines bzw. faserfreies Produkt, das lediglich zerkleinert werden muß und in dem keine Restfaseranteile enthalten sind.

## Patentansprüche

1. Verfahren zum Herstellen eines verstärkten Kunststoffbauteils, insbesondere durch Spritzgießen, Extrudieren oder Extrusionsblasen, bei dem ein thermoplastisches Basismaterial als Schmelze aufbereitet und ein aus pflanzlichen Materialien gewonnenes Verstärkungsmaterial eingebracht wird, **dadurch gekennzeichnet, daß** als Verstärkungsmaterial in schütt- und rieselfähige Form zerkleinerte Schäben, insbesondere von Einjahrespflanzen, und/oder derart zerkleinerte holzige Bestandteile von Chinaschilf der Schmelze des Basismaterials zugeführt und homogen in diese eingemischt werden, wobei das Verstärkungsmaterial keine oder die Schütt- oder Rieselfähigkeit nicht wesentlich beeinträchtigende Anteile an Fasermaterial enthält.

2. Verfahren nach Anspruch 1, **dadurch gekennzeichnet, daß** ein stabilisierendes Material in die Poren des Verstärkungsmaterials eingebracht und/oder das Verstärkungsmaterial mit dem stabilisierenden Material ummantelt wird, so daß das Verstärkungsmaterial eine hohe Widerstandsfähigkeit gegen Komprimierung aufweist.

3. Verfahren nach Anspruch 1 oder 2, **dadurch gekennzeichnet, daß** als stabilisierendes Material Wasserglas, Epoxidharz, expandierbares Epoxidharz und/oder lackartige Substanzen verwendet werden.

4. Verfahren nach einem der vorangehenden Ansprüche, **dadurch gekennzeichnet, daß** Schäben aus grünem Ausgangsmaterial verwendet werden.

5. Verfahren nach einem der Ansprüche 1 bis 4, **dadurch gekennzeichnet, daß** die Schäben eine Länge zwischen etwa 0,5 mm und 10 mm, bevorzugt zwischen 0,5 mm und 5 mm und weiter bevorzugt zwischen etwa 0,5 mm und 3 mm aufweisen.

6. Verfahren nach einem der vorangehenden Ansprüche, **dadurch gekennzeichnet, daß** Schäben von Flachs und/oder Hanf und/oder Kenaf verwendet werden.

7. Verfahren nach einem der vorangehenden Ansprüche, **dadurch gekennzeichnet, daß** Verträglichkeitsmacher bzw. Haftvermittler, insbesondere mit einem Anteil zwischen 0,5 % und 3 %, eingesetzt werden.

8. Verfahren nach einem der vorangehenden Ansprüche, **dadurch gekennzeichnet, daß** als thermoplastisches Basismaterial ein thermoplastischer Kunststoff und/oder ein biologischer Werkstoff wie Lignin oder PHB verwendet wird.

9. Verfahren nach einem der vorangehenden Ansprüche, **dadurch gekennzeichnet, daß** Poren und Hohlräume des Verstärkungsmaterials weitestgehend mit dem stabilisierenden Material ausgefüllt werden.

10. Verfahren nach einem der vorangehenden Ansprüche, **dadurch gekennzeichnet, daß** das Verstärkungsmaterial im wesentlichen ausschließlich ummantelt wird.

11. Verfahren nach einem der vorangehenden Ansprüche **dadurch gekennzeichnet, daß** das stabilisierende Material durch Aufsprühen und/oder Tauchimprägnieren aufgebracht wird.

12. Verfahren nach einem der vorangehenden Ansprüche **dadurch gekennzeichnet, daß** in einem ersten Schritt ein erstes stabilisierendes Material und in mindestens einem weiteren Schritt mindestens ein weiteres stabilisierendes Material aufgebracht wird.

13. Verfahren nach einem der vorangehenden Ansprüche **dadurch gekennzeichnet, daß** das stabilisierende Material thermisch bei einer Temperatur zwischen etwa 100°C und 220°C, bevorzugt zwischen etwa 120°C und 200°C und weiter bevorzugt zwischen etwa 120°C und 150°C ausgehärtet wird.

## Claims

1. Method of producing a reinforced synthetic material component, particularly by injection moulding, extruding or extrusion blowing, in which a thermoplastic basic material is prepared as a melt and a reinforcing material obtained from plant materials is introduced, **characterised in that** shives, particularly of annual plants, comminuted to a form capable of pouring or trickling and/or ligneous constituents of Chinese reeds comminuted **in that** manner are fed as reinforcing material to the melt of the basic material and homogeneously admixed therein, wherein the reinforcing material contains no proportions of fibre material or contains proportions of fibre material not substantially impairing the capability of pouring or trickling.

2. Method according to claim 1, **characterised in that** a stabilising material is introduced into the pores of the reinforcing material and/or the reinforcing material is enclosed by the stabilising material so that the reinforcing material has a high capability of resistance to compression.

3. Method according to claim 1 or 2, **characterised in that** water-glass, epoxy resin, expandable epoxy resin and/or lacquer-like substances are used as stabilising material.

4. Method according to one of the preceding claims, **characterised in that** shives of green starting material are used.

5. Method according to one of claims 1 to 4, **characterised in that** the shives have a length between approximately 0.5 millimetres and 10 millimetres, preferably between 0.5 millimetres and 5 millimetres and more preferably between approximately 0.5 millimetres and 3 millimetres.

6. Method according to one of the preceding claims, **characterised in that** shives of flax and/or hemp and/or kenaf are used.

7. Method according to one of the preceding claims, **characterised in that** compatibility agents or bonding agents are used, particularly with a proportion between 0.5% and 3%.

8. Method according to one of the preceding claims, **characterised in that** a thermoplastic synthetic material and/or a biological material such as lignin or PHP is used as thermoplastic basic material.

9. Method according to one of the preceding claims, **characterised in that** pores and cavities of the reinforcing material are largely filled with the stabilising material.

10. Method according to one of the preceding claims, **characterised in that** the reinforcing material is enclosed substantially exclusively.

11. Method according to one of the preceding claims, **characterised in that** the stabilising material is applied by spraying on and/or dip impregnation.

12. Method according to one of the preceding claims, **characterised in that** a first stabilising material is applied in a first step and at least one further stabilising material is applied in at least one further step.

13. Method according to one of the preceding claims, **characterised in that** the stabilising material is thermally hardened at a temperature between approximately 100° C and 220° C, preferably between approximately 120° C and 200° C and more preferably between approximately 120° C and 150° C.

## Revendications

1. Procédé pour la fabrication d'un élément en matière plastique renforcée, en particulier par moulage par injection, par extrusion ou par extrusion-soufflage, selon lequel on prépare une matière de base thermoplastique sous la forme d'une masse fondue et on incorpore une matière de renforcement issue de matières végétales,
**caractérisé en ce qu'**
on achemine, comme matière de renforcement, des raclures, en particulier des raclures de plantes annuelles, broyées sous une forme semi-fluide et coulante et/ou des composants ligneux broyés de roseau de Chine à la masse fondue de la matière de base et on les incorpore en mélange dans cette dernière de façon homogène, la matière de renforcement ne contenant aucune proportion de matière fibreuse ou ne contenant pas de proportion de matière fibreuse susceptible de détériorer sensiblement la semi-fluidité ou la propriété d'écoulement.

2. Procédé selon la revendication 1,
**caractérisé en ce qu'**
on introduit une matière stabilisante dans les pores de la matière de renforcement et/ou on enrobe la matière de renforcement avec la matière stabilisante, de sorte que la matière de renforcement présente une haute capacité de résistance à la compression.

3. Procédé selon la revendication 1 ou 2,
**caractérisé en ce qu'**
on utilise comme matière stabilisante du verre soluble, une résine époxyde, une résine époxyde expansible et/ou des substances du type des laques.

4. Procédé selon une des revendications précédentes,
**caractérisé en ce qu'**
on utilise des raclures d'une matière première crue.

5. Procédé selon une des revendications 1 à 4,
**caractérisé en ce que**
les raclures ont de préférence une longueur comprise entre environ 0,5 mm et 10 mm, de préférence entre 1,5 mm et 5 mm et, dans un mode encore préféré, entre 0,5 mm et 3 mm.

6. Procédé selon une des revendications précédentes,
**caractérisé en ce qu'**
on utilise des raclures de lin et/ou de chanvre et/ou de kénaff.

7. Procédé selon une des revendications précédentes,
**caractérisé en ce qu'**
on utilise des agents de compatibilité ou des agents de pontage, en particulier dans une proportion comprise entre 0,5 % et 3 %.

8. Procédé selon une des revendications précédentes,
**caractérisé en ce qu'**
on utilise comme matière de base thermoplastique une résine synthétique thermoplastique et/ou une matière biologique comme la lignine ou le PHP.

9. Procédé selon une des revendications précédentes,
**caractérisé en ce qu'**
on comble très largement les pores et cavités de la matière de renforcement avec la matière stabilisante.

10. Procédé selon une des revendications précédentes,
**caractérisé en ce que**
la matière de renforcement est sensiblement exclusivement enrobée.

11. Procédé selon une des revendications précédentes,
**caractérisé en ce que**
la matière stabilisante est appliquée par pulvérisation et/ou par imprégnation par immersion.

12. Procédé selon une des revendications précédentes,
**caractérisé en ce que**
dans une première phase, on applique une première matière stabilisante et, dans au moins une autre phase, au moins une autre matière stabilisante.

13. Procédé selon une des revendications précédentes,
**caractérisé en ce que**
la matière stabilisante est durcie thermiquement à une température comprise entre environ 100°C et 220°C, de préférence entre environ 120°C et 200°C et, dans un mode encore préféré entre environ 120°C et 150°C.
